# EUROPEAN PATENT APPLICATION

(11) **EP 1 968 294 A1**
(43) Date of publication of application: **10.09.2008**
(21) Application number: 08151483.8
(22) Date of filing: 15.02.2008
(51) Int. Cl.: H04M 3/493, H04M 3/51, H04L 12/28

(54) **A communications server for handling parallel voice and data connections and methods of using the same**

(30) Priority: 07.03.2007 US 683190
(71) Applicant: Agere Systems, Inc., Allentown, PA 18109 (US)
(72) Inventor: Landschaft, Assaf, D80801, Muenchen (DE); Manya, Indira, 81827 München (DE); Wohlstadtler, Gal, 53366, Givataim (IL); Wohlstadtler, Gil, 53366, Givataim (IL)
(74) Representative: Williams, David John

(57) **Abstract**

The present invention provides for a communications server and a method of using the same. In one embodiment the communications server, is comprised of (1) a voice channel interface configured to establish a voice channel with a mobile communication device and generate a voice to transmit menu information thereto; and (2) a data channel interface associated with the voice channel interface and configured to establish a data channel with the mobile communication device and transmit data containing the menu information thereto, in response to a selected one of (i) an automatic determination that the mobile communication device is capable of outputting the menu information to a user, and (ii) a command received from the mobile communication device to transmit the data containing the menu information.

## Description

### TECHNICAL FIELD OF THE INVENTION

The present invention is directed, in general, to a communications server and, more particularly, to a communications server for handling a parallel voice and data connection with a mobile communication device.

### BACKGROUND OF THE INVENTION

A large number of businesses are utilizing automated communications servers to direct callers. Automated communications servers permit a number of caller inquiries to be handled without the calling party ever having to talk to a live person. By using automated facilities of this type, the number of employees required to man a call center can be significantly reduced with a consequent reduction in overhead cost. Thus, nearly every call to a business or operation of any size will generally result in the initial contact being with an automated communications server.

A prior art automated communications server will generally provide the caller with a menu of choices that he or she can activate by pressing a specified key on the telephone or, when speech recognition technology is being used, by saying a word or phrase. For example, a caller to an airline information service regarding arrival and departure information will, in nearly every case, result in the caller being connected to a communications server, where he or she will be guided through a series menus of prerecorded options with choices and appropriate instructions. Generally, the option will be given together with the appropriate action, such as press 1 for incoming flight information; press 2 for departure information; and so forth. The caller then makes a choice by pressing the appropriate key on his or her telephone keypad. When the key is pressed a DTMF (dual-tone multifrequency) signal is transmitted to the communications server indicating the caller's selection. In many cases, the caller is guided through another series of prerecorded audio menus with further choices and instructions. Finally, after going through a number of menus and making several selections, the caller will get the desired information of be able to talk to a live person who, presumably, can provide the requested assistance.

It is human nature that a caller, particularly a first time caller, will listen to the entire menu of choices before making a selection. This is natural so that he or she will be informed of all the possible options before making a choice. The entire voice-based procedure for controlling automated communication can be quite time-consuming and, accordingly, very tedious. If a long menu of choices is being transmitted, the caller may not even remember which number needs to be pressed to make the desired selection when the end of the message is reached. This may require the caller to start the entire menu process all over again.

Accordingly, what is needed in the art is an improved method to handle automated communication processes between a caller and an automated communications server.

### SUMMARY OF THE INVENTION

To address the above-discussed deficiencies of the prior art, the present invention provides, in one aspect, a communications server comprised of (1) a voice channel interface configured to establish a voice channel with a mobile communication device and generate a voice to transmit menu information thereto; and (2) a data channel interface associated with the voice channel interface and configured to establish a data channel with the mobile communication device and transmit data containing the menu information thereto in response to a selected one of (i) an automatic determination that the mobile communication device is capable of outputting the menu information to a user, and (ii) a command received from the mobile communication device to transmit the data containing the menu information.

The present invention makes mobile phones and other mobile communication devices easier for a user in navigating the tree of choices offered by automated servers used in nearly all call centers. As used herein, the term "communications server" includes all types of devices used to provide a menu of choices to a user of a mobile communication device from which a user is to make a choice. It includes, for example, elaborate systems such as those used by major airlines and hospitals where thousands of calls are processed each day. It also includes a simple answering machine in a residence where the choice is from the people that reside in the residence and the caller is requested to indicate the name of the person he or she wants to contact.

In one embodiment of the communications server, the data containing menu information is displayed on a display or screen associated with the mobile communication device. In another embodiment, the mobile communication device displays the data containing menu information as a list of user-selectable entries. In still another embodiment, the communication device displays the data containing menu information as a form adapted for user input.

A particularly useful embodiment of the invention provides for the mobile communication device to transmit information on the voice channel interface as a DTMF signal. In one aspect of the invention, the DTMF signal is generated by a user pressing a key on a keyboard associated with the mobile communication device.

In another embodiment of the invention, at least one voice message is generated by the communications server upon initial contact by the mobile communication device. Another aspect of the invention provides for a user to respond to the at least one voice message by transmitting a command on the voice channel. In another embodiment of the invention, the data channel interface is configured to generate further menu information in response to a user selection from previously sent menu information.

The invention is particularly useful because it is versatile. In one embodiment, the mobile communication device is selected from the group consisting of a mobile phone; a PDA; an MDA; a Pocket PC; or a Tablet PC.

The foregoing has outlined preferred and alternative features of the present invention so that those skilled in the pertinent art may better understand the detailed description of the invention that follows. Additional features of the invention will be described hereinafter that form the subject of the claims of the invention. Those skilled in the pertinent art should appreciate that they can readily use the disclosed conception and specific embodiments as a basis for designing or modifying other structures for carrying out the same purposes of the present invention. Those skilled in the pertinent art should also realize that such equivalent constructions do not depart from the spirit and scope of the invention.

### BRIEF DESCRIPTION OF THE DRAWINGS

For a more complete understanding of the invention, reference is now made to the following descriptions taken in conjunction with the accompanying drawings, in which:
FIGURE 1 illustrates a communication system utilizing a communications server constructed in accordance with the present invention;
FIGURE 2 illustrated is a block diagram of one embodiment of a mobile communication device that can be used with the present invention;
FIGURE 3 illustrated is a flow chart explaining one embodiment of the present invention; and
FIGURE 4 illustrates a flow chart of a mobile phone utilizing an embodiment of the present invention to receive data containing menu information.

### DETAILED DESCRIPTION

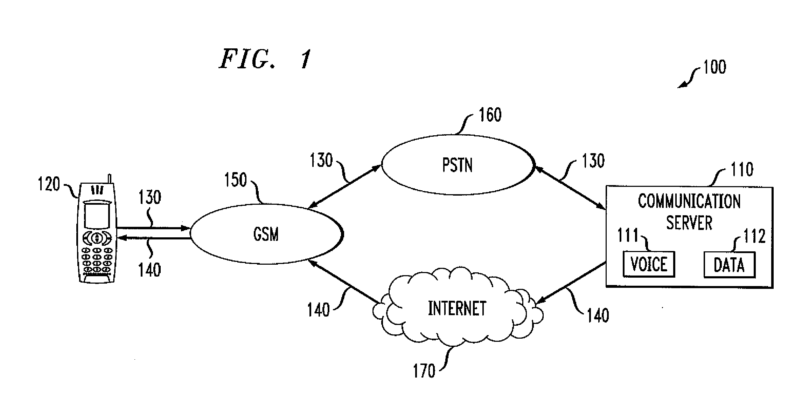

Referring initially to FIGURE 1, illustrated is a communication system 100 utilizing a communications server 110 constructed in accordance with the present invention. In the illustrated communication system 100, a mobile phone 120 establishes a voice channel 130 connection with the communications server 110 via a voice channel interface 111. A data channel interface 112, associated with the voice channel interface 111, is configured to establish a data channel 140 with the mobile phone 120. In the illustrated embodiment, the data channel 140 parallels the voice channel 130.

The illustrated system 100 may be adapted for use in a GSM (Global System for Mobile Communications) network 150 and supports the GPRS (General Packet Radio Services) standard. In the illustrated embodiment, the mobile phone 120 is capable of establishing two parallel connections to the GSM network 150; a voice connection over a voice channel 130 and a data connection over a data channel 140. However, the illustrated system is not limited to a GSM network 150 and may support standards other than GPRS, which standards may be now known or hereinafter developed.

In FIGURE 1 the voice channel 130 connection is via a PSTN (Public Switched Telephone Network) 160 connected to the GSM network 150. The communications server 110 is connected to the mobile phone 120 via the data channel 140 and an Internet 170 connection. The GSM network 150 is also connected or has access to the Internet 170. However, as will be readily apparent to those skilled in the pertinent art, the present invention is not limited to a voice channel 130 connection via a GSM network 150 and a PSTN network 130. The voice channel 130, could, for example, be a direct voice channel 130 connection with the communications server 110. An example of such a direct connection would be direct connection between a police mobile communication device, such as a police radio, and a police headquarters communications server 110. Another example would be voice channel 130 communications between a military unit in the field and its command and control center. Also, it is not necessary for the data channel 140 to go through the Internet 170 and GSM network 150 to be within the intended scope of the present invention. The data channel 140 can be established in any manner known to those skilled in the pertinent art and still be within the intended scope of the present invention.

A communications server 110 constructed in accordance with the present invention will have an voice channel interface 110 that is capable of establishing a voice channel 130 with a mobile communication device, such a the mobile phone illustrated in FIGURE 1, and generate a voice to transmit menu information to the mobile communication device. The communications server 110 also has a data channel interface 112 associated with the voice channel interface 111 and configured to establish a data channel 140 with the mobile communication device and generate data containing menu information in response to one of (i) an automatic determination that the mobile communication device is capable of outputting the menu information to the mobile communication device; or, upon receipt of a command from the mobile communication device, to transmit the data containing menu information.

The present invention permits the simultaneous handling of voice and data. In handling data in FIGURE 1, GPRS push capabilities will provide the unidirectional data transmission from the communication server 110 to the mobile communication device. As those skilled in the pertinent art will understand, any supported data channel type with any type of mobile communication device may be used to establish a data connection; such as, for example, data communications based on SMS (Short Messaging Service).

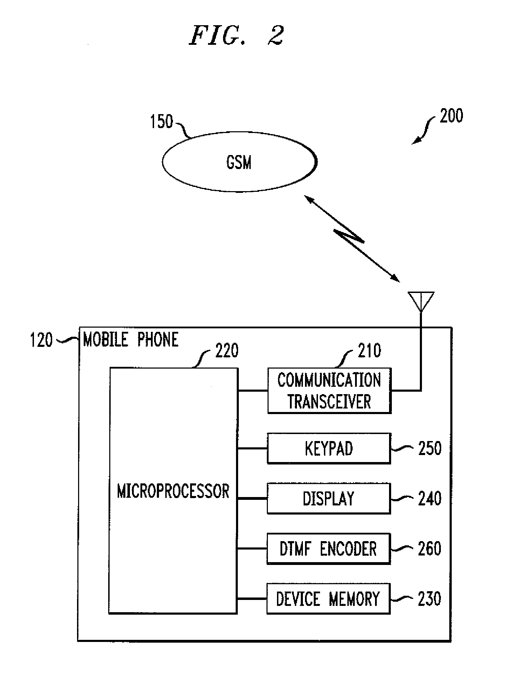

Turning now to FIGURE 2, illustrated is a block diagram of one embodiment 200 of a mobile communication device that can be used with the present invention. The illustrated device is a mobile phone 120 that is provided with a communication transceiver 210 for data communication purposes. The communication transceiver 210 is adapted to communicate with a cellular network 150 by means of a parallel voice channel and data channel. The mobile phone 120 is controlled by a microprocessor 220, which executes operating software stored in a memory 230. In one embodiment of the invention, the software executes a process of generating output information based on menu information data received from the communications server 110 via the data channel 140. In the illustrated embodiment, menu information is output as visual information on a display 240. The menu information can be output as text with user-selectable menu entries, or in a text form with user-editable text boxes. It can even be output as user-selectable symbols, sounds, vibrations, etc.

In response to the output of menu information, a user of the mobile phone 120 can make a selection or fill in a text box using a keypad 250. Each time a key is pressed on the keypad 250 a DTMF signal is generated, which DTMF signal will be transmitted to the communications server 110 over the voice channel 130. The illustrated mobile phone 120 has a DTMF encoder 260 for generating the DTMF signals. In response to a user selection made from menu information transmitted to the communications server 110 via the voice channel 130, further menu information may be generated by the data channel interface 112 and transmitted to the mobile phone 120 over the data channel 140. Although the illustrated embodiment provides for a user to make a selection by pressing a key on the keypad 250, the invention is applicable to any means by which a selection may be made and transmitted over the voice channel 130 to the communications server 110. For example, speech recognition technology resident in the communications server 110 may be used to recognize voice commands given by the user in response to menu information presented on the display 240.

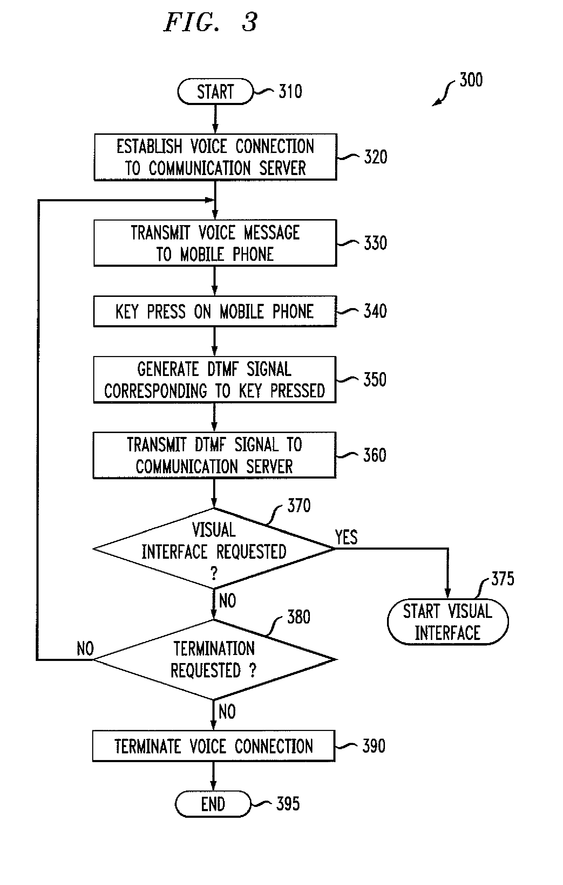

Turning now to FIGURE 3, illustrated is a flow chart 300 explaining one embodiment of the present invention. This embodiment provides for the user of a mobile phone 120 to issue a voice command, which will be transmitted over the voice channel 130, to start a visual interface of data transmitted over the data channel 140. Of course, the visual interface can be activated without a voice command and still be within the intended scope of the present invention. For example, the communications server 110 may be programmed to automatically transmit data over the data channel 140 when a connection is initially established over the voice channel 140. In one embodiment of the invention, the communications server 110 is programmed to automatically transmit data on the data channel 140 when contact is established over the voice channel 130 from identified mobile communication devices. In another embodiment of the invention, the mobile communication device is programmed to automatically command the communications server 110 to send data over the data channel 140 upon initial contact.

In the illustrated in FIGURE 3, after a start step 310, a voice connection 320 is established over the voice channel 130 by the mobile communication device user calling the communications server 320. In this embodiment, the communications server 110 in a transmit voice message to mobile phone 330 step, transmits a prerecorded voice message to the mobile phone inviting the user to activate the data channel 140 in a key press on mobile phone 340 step. The prerecorded voice message may also include information informing the user of the functional requirements to make the selection. Such voice message would give an instruction that may say please press 1 to activate text or press 2 to continue with voice. If the user presses a key in the key press on mobile phone step 340, a DTMF signal representing the selected key is generated in a generate DTMF signal corresponding to key pressed 350 step. In a transmit DTMF signal to communications server 360 the users selection is transmitted to the communications server 110 over the voice channel 130.

Upon receipt of the DTMF signal, the communications server 110 will determine the key pressed in a visual interface requested query 370. If the query is affirmative because the key for activating the text interface was pressed, the communications server 110 commences the transmission of data containing menu information on the data channel 140 in a manner that can be output on a visual interface and the mobile phone's visual interface will be activated in a start visual interface 375 step. If the response to the visual interface requested 370 was negative, a termination requested 380 query will be made. If the response is affirmative, in a terminate voice connection 390, the voice channel connection will be terminated and the process is terminated in an end 395 step. If the response is negative, process reverts back to the transmit voice message to mobile phone 330. The voice channel 130 will then again deliver a voice message requesting the user to press requesting a data channel to be established or not select such a key, whereupon, the menu information will be delivered over the voice channel 130.

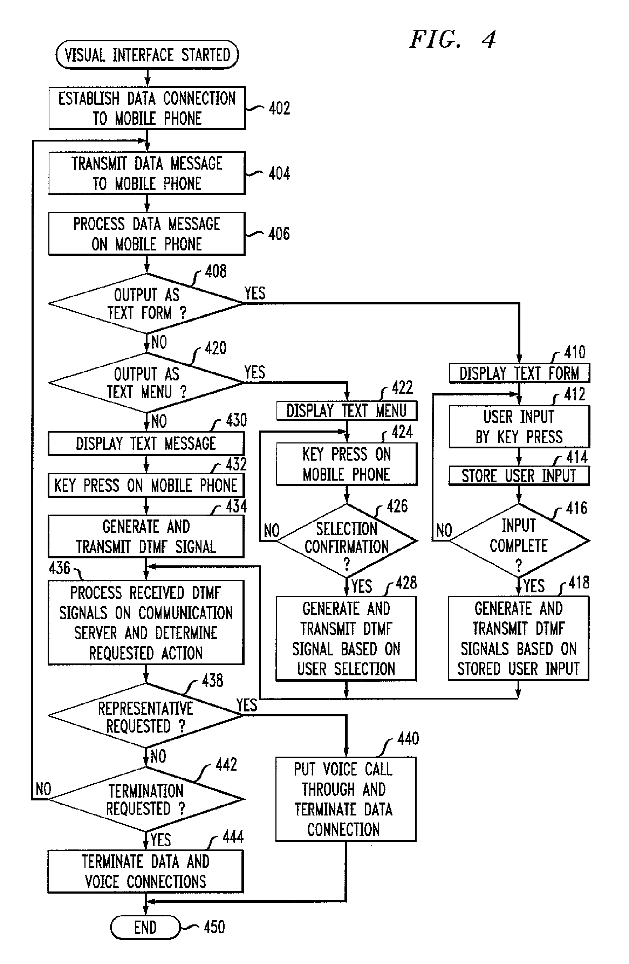

Turning now to FIGURE 4, illustrated is a flow chart of a mobile phone utilizing an embodiment of the present invention to receive data containing menu information. The user of the mobile communication device initiates the process for viewing menu information on a visual interface by issuing a command to such effect to the communications server. Upon receipt of such command, a data channel connection with the mobile phone is initiated in an establish data connection to mobile phone 402 step. If the GPRS standard is utilized, the transmission of data to the mobile phone will most probably be based on a GPRS push service. However, a data connection could also be established by utilizing SMS. As will be understood by those skilled in the pertinent art, the invention is intended to encompass any standard or protocol utilized to establish a data channel parallel to a voice channel, whether now known or subsequently developed. After a data channel connection is opened in an establish data connection to mobile phone 402 step, a data message with menu information is transmitted in a transmit data to mobile phone 404 step. The data containing the menu information is then processed by the mobile phone in process data on mobile phone 408 step. In one embodiment of the invention, the mobile phone, or other mobile communication device, is provided with software that is especially adapted for this purpose. The received data will also provide information as to the form of the menu information. The menu information could be provided as a text menu with user-selectable menu entries; as a text form with user-editable text; or even as a plain text message. The term menu information is intended for this purpose to include any and all forms of data that may be sent over the data channel from the communications server to the mobile communication device.

In the embodiment illustrated in FIGURE 4, a query is then presented as to whether the data containing menu information is to be output as text form 408 with at least one editable text box. If the response is in the affirmative, the applicable form is displayed in a display text form 410 step. The user then inputs data in the text box by pressing a key on the keypad of the mobile phone in a user input by key press 412 step. Each digit or character entered by the user is stored in a store user input 414 step. The user input by key press 412 and store user input 414 steps are repeated until a key is pressed indicating that the input is response to an input complete 416 query. If user input is complete, a sequence of DTMF signals is generated and transmitted to the communications server in a generate and transmit DTMF signals based on stored user input 418 step. Since DTMF signals typically represent only digits, a character may require at least two DTMF signals based on a suitable format, such as a format representing the numerical ASCII code of the character.

Going back to the output as a text form 408 query in FIGURE 4, if the response is negative, the step is determining whether menu information is to be output in an output as text menu 420 query. If the answer is in the affirmative, in a display text menu 422 step, menu information with user-selectable entries is displayed. In a key press on mobile phone 424 step, the user can browse through the menu and make a selection. Once the selection is decided upon, in a selection confirmation 426 step, the user either confirms the selection or disaffirms it. If the selection is disaffirmed, the user is directed back to the key press on mobile phone 424 step to make a selection. If the selection is confirmed, a DTMF signal representing the user's selection will be generated and transmitted to the communications server in a generate and transmit DTMF signal based on user selection 428 step.

The beneficial aspects of the present invention should be readily apparent to those skilled in the pertinent art. A user, instead of listening to a long voice message with a number of options, can see the menu information on the display of a mobile phone and quickly decide which of the displayed options he or she wants to select. This is faster and much more user friendly than that offered by prior art technology where a user must wait through an audio menu of several choices before inputting a desired option.

Returning again to the output as text menu 420 query in FIGURE 4, if the response is negative, the next step is a display text message 430 step. This means that the menu information will not be output to the user as either a menu of choices or as a text form. Instead, the data containing menu information will be displayed in a display text message 430 step as a plain text message. The user can acknowledge the text message in a key press on mobile phone 432 step. In a generate and transmit DTMF signal 434 step, a pre-defined DTMF signal will be generated and transmitted to the communications server confirming delivery of the text message.

Upon receipt of the appropriate DTMF signals, the communications server undertakes a process received DTMF signals on communications server and determine requested action 436 step. In a representative requested 438 query, a determination is made whether the user of the mobile phone wants to speak to a person. If the response is affirmative, a put voice call through and terminate data connection 440 step provides for a voice connection with a person and the data channel connection will be terminated. If the response to the representative requested 438 query is negative, the user presented with a termination requested 442 query. If the response is negative, a data message to the mobile phone will be transmitted over the data channel in a transmit data message to mobile phone 404 step and the process will be repeated. If the response is affirmative, in a terminate data and voice connections 444 step, the voice channel and the data channel connection between the mobile phone and communications server will be terminated. The entire process is concluded with an end step 450.

As will be understood by those skilled in the pertinent art, the present invention enhances the interface between a mobile communication device and a communications server. It is much more convenient for a user to read menu information than having to listen to such information related verbally. In should also be noted that the invention is particularly beneficial to the hearing impaired. A person who has diminished or no hearing will benefit greatly by having access to visual information that is made possible by the present invention.

It will be understood by those skilled in the pertinent art that the term mobile communication device includes a mobile phone, a PDA, an MDA, a Pocket PC, or a Tablet PC. The mobile communication device can be any device capable of establishing a data connection parallel to a voice connection.

As indicated earlier, it is also the intent of the present invention that the term "communications server" includes all types of devices used to provide a menu of choices to a user of a mobile communication device. The communications server can be a computer connectable to a telecommunication network or a computer connectable to an IP-based network that is adapted for VoIP (Voice over IP). It includes, for example, elaborate systems such as those used by hospitals and airlines where thousands of calls are processed each day. It also includes a simple answering machine in a residence where the choice is limited to names of residents and the user selects the person he or she wants to contact. Thus, any automated communication device capable of performing the inventive steps can be used for the invention.

Although the present invention has been described in detail, those skilled in the pertinent art should understand that they can make various changes, substitutions and alterations herein without departing from the spirit and scope of the invention in its broadest form.

## Claims

1. A communications server, comprising:
a voice channel interface configured to establish a voice channel with a mobile communication device and generate a voice to transmit menu information thereto; and
a data channel interface associated with said voice channel interface and configured to establish a data channel with said mobile communication device and transmit data containing said menu information thereto in response to a selected one of:
an automatic determination that said mobile communication device is capable of outputting said menu information to a user, and
a command received from said mobile communication device to transmit said data containing said menu information.

2. The device as recited in Claim 1 wherein said communication device displays said data containing said menu information as a form adapted for user input.

3. The device as recited in Claim 1 wherein said mobile communication device transmits information on said voice channel interface as a DTMF signal.

4. The device as recited in Claim 1 wherein a least one voice message is generated by said communications server upon initial contact by said mobile communication device.

5. The device as recited in Claim 1 wherein said data channel interface is configured to generate further menu information in response to a user selection from said menu information.

6. The device as recited in Claim 1 wherein said mobile communication device is selected from the group consisting of:
a mobile phone;
a PDA;
an MDA;
a Pocket PC; or
a Tablet PC.

7. A communications method, comprising:
establishing a voice channel interface connection with a mobile communication device, said voice channel interface generating a voice signal for transmitting menu information; and
establishing a data connection between a data channel interface and said mobile communication device for transmitting data containing said menu information thereto in response to a selected one of:
an automatic determination that said mobile communication device is capable of outputting said menu information to a user, and
a command received from said mobile communication device to transmit said data containing said menu information.

8. The method as recited in Claim 7 wherein said mobile communication device displays said data containing said menu information as a list of user-selectable entries.

9. The device as recited in Claim 7 wherein said data channel interface is configured to generate further menu information in response to a user selection from said menu information.

10. The device as recited in Claim 7 wherein said mobile communication device is selected from the group consisting of:
a mobile phone;
a PDA;
an MDA;
a Pocket PC; or
a Tablet PC.
